# EUROPÄISCHE PATENTSCHRIFT

(11) **EP 3 916 185 B1**
(45) Veröffentlichungstag und Bekanntmachung des Hinweises auf die Patenterteilung: **12.07.2023**
(21) Anmeldenummer: 21186881.5
(22) Anmeldetag: 08.05.2018
(51) Int. Cl.: E05F 15/63, E05F 1/12, E05F 1/10, E05F 5/10, E05F 5/00

(54) **MÖBELANTRIEBSSYSTEM**
FURNITURE DRIVE SYSTEM
SYSTÈME D'ENTRAÎNEMENT POUR MEUBLES

(30) Priorität: 12.05.2017 AT 504052017
(43) Veröffentlichungstag der Anmeldung: 01.12.2021
(62) Teilanmeldung aus: 18729545.6
(73) Patentinhaber: Julius Blum GmbH, 6973 Höchst (AT)
(72) Erfinder: HÄMMERLE, Kurt, 6890 Lustenau (AT); GRIMM, Matthias, 6844 Altach (AT)
(74) Vertreter: Torggler & Hofmann Patentanwälte - Innsbruck

(56) Entgegenhaltungen:
- WO-A1-2006/099645
- WO-A1-2008/134786
- WO-A1-2009/039541
- JP-A- 2001 012 145

## Beschreibung

Die Erfindung betrifft ein Möbelantriebssystem für ein an einem Möbelkorpus bewegbar gelagertes Möbelteil, mit einer mechanischen Stelleinheit, welche wenigstens einen schwenkbar gelagerten Stellarm zum Bewegen des bewegbaren Möbelteils und wenigstens einen Kraftspeicher zur Kraftbeaufschlagung des wenigstens einen Stellarms aufweist, einer elektrischen Antriebseinheit, welche als eine von der mechanischen Stelleinheit gesondert ausgebildete Baueinheit ausgeführt ist und welche wenigstens einen Elektromotor zur elektromotorischen Unterstützung der Bewegung des bewegbaren Möbelteils und wenigstens einen von dem wenigstens einen Elektromotor antreibbaren Mitnehmer zur Übertragung eines Drehmoments des Elektromotors auf die mechanische Stelleinheit aufweist, und wenigstens einer Dämpfungsvorrichtung zur Dämpfung der Bewegung des bewegbaren Möbelteils. Die Erfindung betrifft weiterhin ein Möbel mit einem Möbelkorpus, wenigstens einem am Möbelkorpus bewegbar gelagerten Möbelteil und wenigstens einem solchen Möbelantriebssystem.

Möbelantriebssysteme gemäß dem Oberbegriff des Anspruchs 1 sind bereits aus dem Stand der Technik bekannt (vgl. z.B. WO 2006/099645 A1). Um eine möglichst harmonische Bewegung des bewegbaren Möbelteils zu erzielen, sind eine oder mehrere Dämpfungsvorrichtungen zur Dämpfung der Bewegung des bewegbaren Möbelteils vorgesehen. Sie dienen insbesondere dazu, die Bewegung des Möbelteils in die beiden Endlagen, also die Schließstellung bzw. die vollständige Öffnungsstellung, zu dämpfen.

Bei den Möbelantriebssystemen, welche einerseits eine mechanische Stelleinheit und andererseits eine elektrische Antriebseinheit aufweisen, ist es häufig vorgesehen, dass die elektrische Antriebseinheit auch optional weggelassen wird, d.h. nur die mechanische Stelleinheit verwendet wird. Umgekehrt ausgedrückt kann sich ein Nutzer beim Kauf dazu entscheiden, entweder nur die mechanische Stelleinheit zu erwerben, oder auch noch zusätzlich die elektrische Antriebseinheit. Durch die zusätzliche Verwendung der elektrischen Antriebseinheit ändern sich allerdings die Erfordernisse an die Dämpfung des bewegbaren Möbelteils.

Beispielsweise wäre es bei der Verwendung der mechanischen Stelleinheit ohne elektrische Antriebseinheit nicht erforderlich, die Bewegung des Möbelteils in die vollständige Öffnungsstellung zu dämpfen, da man in diesem Fall den wenigstens einen Kraftspeicher derart auslegen könnte, dass das Gewicht des bewegbaren Möbelteils perfekt von dem wenigstens einen Kraftspeicher kompensiert ist. Wird nun die elektrische Antriebseinheit der mechanischen Stelleinheit hinzugefügt, so bewegt die elektrische Antriebseinheit das bewegbare Möbelteil ungebremst in die vollständige Öffnungsstellung. In diesem Fall wäre eine zusätzliche Dämpfung wünschenswert.

Um diesem Wunsch Rechnung zu tragen, werden im Stand der Technik zwei Ansätze gewählt, wobei ein erster Ansatz darin besteht, den wenigstens einen Elektromotor derart anzusteuern, dass eine Bremswirkung erzielt wird. Dieser Weg ist allerdings nachteilig, da man in vielen Fällen die elektrische Antriebseinheit auch mit einer Freilaufkupplung beispielsweise zur Vermeidung von Verletzungen ausstatten möchte. Würde man nun die Geschwindigkeit des Elektromotors zur Erzielung einer Bremswirkung reduzieren, so würde die Freilaufkupplung aktiv werden und den Antriebsstrang unterbrechen.

Ein zweiter Ansatz besteht darin, die mechanische Stelleinheit mit einer entsprechenden Dämpfungsvorrichtung zu versehen. Gleichzeitig muss aber der wenigstens eine Kraftspeicher derart modifiziert werden, dass eine Kraft auf den wenigstens einen Stellarm bzw. das bewegbare Möbelteil in Richtung der vollständigen Öffnungsstellung ausgeübt wird, damit das bewegbare Möbelteil beim Betrieb ohne elektrische Antriebseinheit entgegen der Dämpfungswirkung der Dämpfungsvorrichtung in die vollständige Öffnungsstellung bewegbar ist, ohne dass ein Nutzer eine zusätzliche Kraft aufbringen muss. Das bedeutet aber gleichzeitig auch, dass auf das bewegbare Möbelteil durch den wenigstens einen Kraftspeicher immer eine über die Kompensation des Gewichts des bewegbaren Möbelteils hinausgehende Kraft ausgeübt wird. Dies ist wiederum nachteilig, da ein Nutzer das bewegbare Möbelteil häufig in einer bestimmten Stellung belassen möchte, was aber nicht möglich ist, da der wenigstens eine Kraftspeicher das bewegbare Möbelteil aus dieser Stellung automatisch heraus bewegt.

Letztendlich versucht man beim Stand der Technik also in Bezug auf die wenigstens eine Dämpfungsvorrichtung einen Kompromiss zu schließen, welcher einerseits dem Betrieb ohne elektrische Antriebseinheit und andererseits dem Betrieb mit elektrischer Antriebseinheit Rechnung trägt. Dabei treten immer Nachteile auf.

Die Aufgabe der vorliegenden Erfindung besteht darin, ein gegenüber dem Stand der Technik verbessertes Möbelantriebssystem, bei welchem insbesondere die vorgenannten Nachteile zumindest zum Teil vermieden werden, sowie ein Möbel mit einem solchermaßen verbesserten Möbelantriebssystem bereitzustellen. Diese Aufgabe wird gelöst durch die Merkmale der unabhängigen Ansprüche 1 und 12.

Beim erfindungsgemäßen Möbelantriebssystem ist es also vorgesehen, dass die wenigstens eine Dämpfungsvorrichtung zur Dämpfung der Bewegung des bewegbaren Möbelteils in der Baueinheit der elektrischen Antriebseinheit angeordnet ist.

Das hat den Vorteil, dass immer dann, wenn die mechanische Stelleinheit zusammen mit der elektrischen Antriebseinheit verwendet wird, automatisch bereits den geänderten Erfordernissen an die Dämpfung der Bewegung des bewegbaren Möbelteils Rechnung getragen wird, ohne dass dabei bei einer in der mechanischen Stelleinheit vorgesehenen Dämpfungsvorrichtung ein Kompromiss geschlossen werden müsste, oder zwei unterschiedliche mechanische Stelleinheiten bereitgehalten werden müssten, wobei eine der beiden Stelleinheiten für den Betrieb ohne elektrische Antriebseinheit und die andere Stelleinheit für den Betrieb mit elektrischer Antriebseinheit ausgelegt ist. Dies wird dadurch erreicht, dass zusätzlich zu der elektrischen Antriebseinheit automatisch auch wenigstens eine Dämpfungsvorrichtung der mechanischen Stelleinheit hinzugefügt wird.

Eine solche Lösung hat ein Fachmann bisher nicht in Erwägung gezogen, da das Vorurteil herrschte, dass sämtliche mechanische Komponenten, also auch die Dämpfungsvorrichtungen, in die mechanische Stelleinheit integriert werden, und dass die elektrische Antriebseinheit nur Komponenten umfasst, welche unmittelbar zum elektromotorischen Antriebsstrang gehören. Diese strikte Trennung aufzubrechen, ist für einen Fachmann nicht naheliegend.

Der erfindungsgemäße Vorteil kommt insbesondere dann zu tragen, wenn es sich - wie dies bei einem bevorzugten Ausführungsbeispiel vorgesehen ist - um einen Öffnungsdämpfer handelt, wenn also die wenigstens eine in der Baueinheit der elektrischen Antriebseinheit angeordnete Dämpfungsvorrichtung nur über einen Teilbereich der Bewegung des schwenkbar gelagerten Stellarms beaufschlagbar ist, vorzugsweise wobei der Teilbereich zwischen einer Stellung des schwenkbar gelagerten Stellarms, welcher einer Teilöffnungsstellung des bewegbaren Möbelteils entspricht, und einer Stellung des schwenkbar gelagerten Stellarms, welcher einer vollständigen Öffnungsstellung des bewegbaren Möbelteils entspricht, angeordnet ist.

Die Ausstattung der elektrischen Antriebseinheit mit wenigstens einer Dämpfungsvorrichtung schließt nicht aus, dass auch die mechanische Stelleinheit wenigstens eine Dämpfungsvorrichtung umfasst. Insbesondere kann es vorgesehen sein, dass auch die mechanische Stelleinheit wenigstens eine Dämpfungsvorrichtung zur Dämpfung der Bewegung des bewegbaren Möbelteils umfasst, vorzugsweise welche zumindest in einem Teilbereich zwischen einer Stellung des schwenkbar gelagerten Stellarms, welcher einer Schließstellung des bewegbaren Möbelteils entspricht, und einer Stellung des schwenkbar gelagerten Stellarms, welcher einer der Schließstellung vorgelagerten Teilöffnungsstellung des bewegbaren Möbelteils entspricht, beaufschlagbar ist.

Erfindungsgemäß ist weiter zwischen dem wenigstens einen Elektromotor und dem wenigstens einen Mitnehmer ein Getriebe vorgesehen, und die wenigstens eine in der Baueinheit der elektrischen Antriebseinheit angeordnete Dämpfungsvorrichtung ist von einem Teil des Getriebes beaufschlagbar, vorzugsweise welches Getriebe einen schwenkbar gelagerten Hebel, welcher in Kontakt mit der Dämpfungsvorrichtung steht oder in Kontakt mit der Dämpfungsvorrichtung bringbar ist, aufweist. Durch die Beaufschlagung der wenigstens einen Dämpfungsvorrichtung über das Getriebe wird einerseits eine kompakte Bauform erzielt. Andererseits erfolgt die Beaufschlagung besonders effizient, da an einer geeigneten Stelle des Getriebes die Kraft zur Beaufschlagung abgegriffen werden kann.

Das wenigstens eine Getriebe umfasst erfindungsgemäß wenigstens zwei Getriebestufen, und optional zusätzlich eine Freilaufkupplung und/oder eine Überlastkupplung.

Ergänzend zur Beaufschlagung über das Getriebe kann es auch vorgesehen sein, dass die mechanische Stelleinheit wenigstens einen Aktuator umfasst und die wenigstens eine in der Baueinheit der elektrischen Antriebseinheit angeordnete Dämpfungsvorrichtung von dem Aktuator der mechanischen Stelleinheit beaufschlagbar ist.

Weitere vorteilhafte Ausführungsformen sind in den abhängigen Ansprüchen 7 bis 11 definiert, wobei in Zusammenhang mit dem in Anspruch 9 definierten Ausführungsbeispiel, welches vorsieht, dass die mechanische Stelleinheit wenigstens ein bewegbar gelagertes Stellteil zur Übertragung einer Kraft von dem wenigstens einen Kraftspeicher auf den wenigstens einen Stellarm aufweist, wobei das wenigstens eine Stellteil wenigstens eine Übertragungsöffnung aufweist, in welche der wenigstens eine von dem wenigstens einen Elektromotor antreibbare Mitnehmer eingreift oder eingreifen kann, auf den Offenbarungsgehalt der internationalen Patentanmeldung mit dem Aktenzeichen PCT/AT2017/060027 verwiesen sei.

Wie eingangs ausgeführt, wird Schutz auch begehrt für ein Möbel mit einem Möbelkorpus, wenigstens einem am Möbelkorpus bewegbar gelagerten Möbelteil und wenigstens einem erfindungsgemäßen Möbelantriebssystem für das wenigstens eine Möbelteil, vorzugsweise wobei das wenigstens eine bewegbare Möbelteil um eine horizontale Achse verschwenkbar ist.

Weitere Einzelheiten und Vorteile der Erfindung werden anhand der Figurenbeschreibung unter Bezugnahme auf die Zeichnungen im Folgenden näher erläutert. Darin zeigen:
- Fig. 1a: ein Möbel mit einem bewegbar gelagerten Möbelteil in Form einer um eine horizontale Achse verschwenkbaren Möbelklappe in einer perspektivischen Ansicht,
- Fig. 1b: das Möbel gemäß Fig. 1a, wobei das bewegbare Möbelteil in der Darstellung weggelassen wurde,
- Fig. 2: das erfindungsgemäße Möbelantriebssystem gemäß einem bevorzugten Ausführungsbeispiel in einer perspektivischen Ansicht,
- Fig. 3: die mechanische Stelleinheit des Möbelantriebssystems gemäß dem bevorzugten Ausführungsbeispiel in einer perspektivischen Ansicht,
- Fig. 4a: das erfindungsgemäße Möbelantriebssystem gemäß dem bevorzugten Ausführungsbeispiel in einer Ansicht von der Seite, wobei ein Teil des Getriebes in der Darstellung weggelassen wurde und sich der Stellarm in einer Teilöffnungsstellung befindet,
- Fig. 4b: eine Querschnittsdarstellung entlang der in der Fig. 4a eingezeichneten Schnittebene 39,
- Fig. 5a: das erfindungsgemäße Möbelantriebssystem gemäß dem bevorzugten Ausführungsbeispiel in einer Ansicht von der Seite, wobei ein Teil des Getriebes in der Darstellung weggelassen wurde und sich der Stellarm in der vollständigen Öffnungsstellung befindet, und
- Fig. 5b: eine Querschnittsdarstellung entlang der in der Fig. 5a eingezeichneten Schnittebene 39.

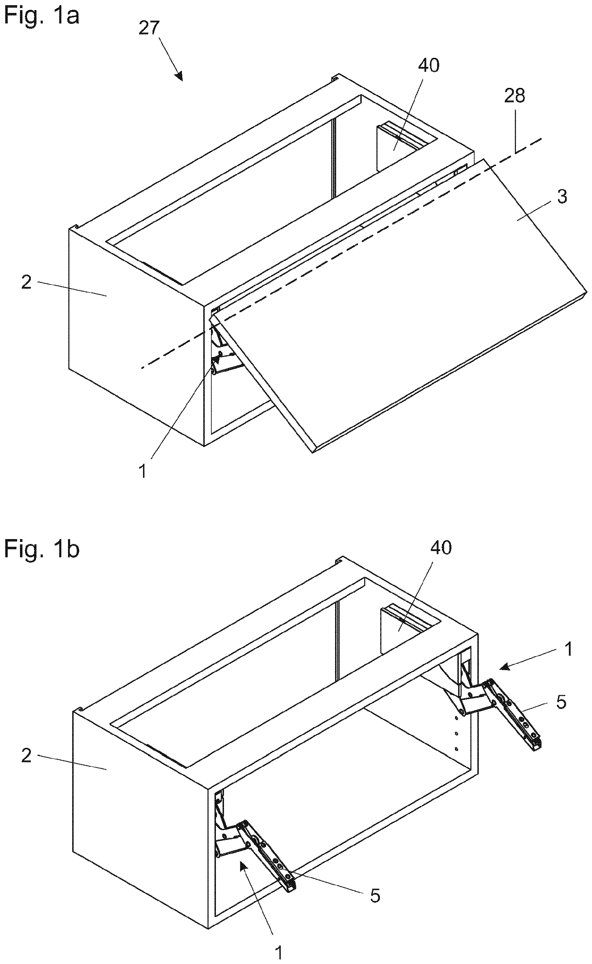

Figur 1a zeigt ein Möbel 27 in Form eines Oberschranks, wobei das Möbel 27 einen Möbelkorpus 2 aufweist. Bewegbar am Möbelkorpus 2 ist ein Möbelteil 3 in Form einer Klappe gelagert. Das Möbelteil 3 ist um eine horizontale Achse 28 verschwenkbar. Der Möbelkorpus 2 umfasst zwei Seitenwände, an denen jeweils ein Möbelantriebssystem 1 gemäß einem bevorzugten Ausführungsbeispiel angeordnet ist. In der Figur 1b ist das Möbelteil 3 nicht dargestellt.

Gemäß dem bevorzugten Ausführungsbeispiel ist das Möbelantriebssystem 1 also dazu ausgelegt, eine um eine horizontale Achse 28 schwenkbar gelagerte Klappe 3 anzutreiben. Das Möbelantriebssystem kann genauso gut aber auch dazu eingesetzt werden, eine um eine vertikale Achse schwenkbar gelagerte Möbeltüre anzutreiben. Hierzu wären wenn überhaupt nur geringfügige Modifikationen notwendig.

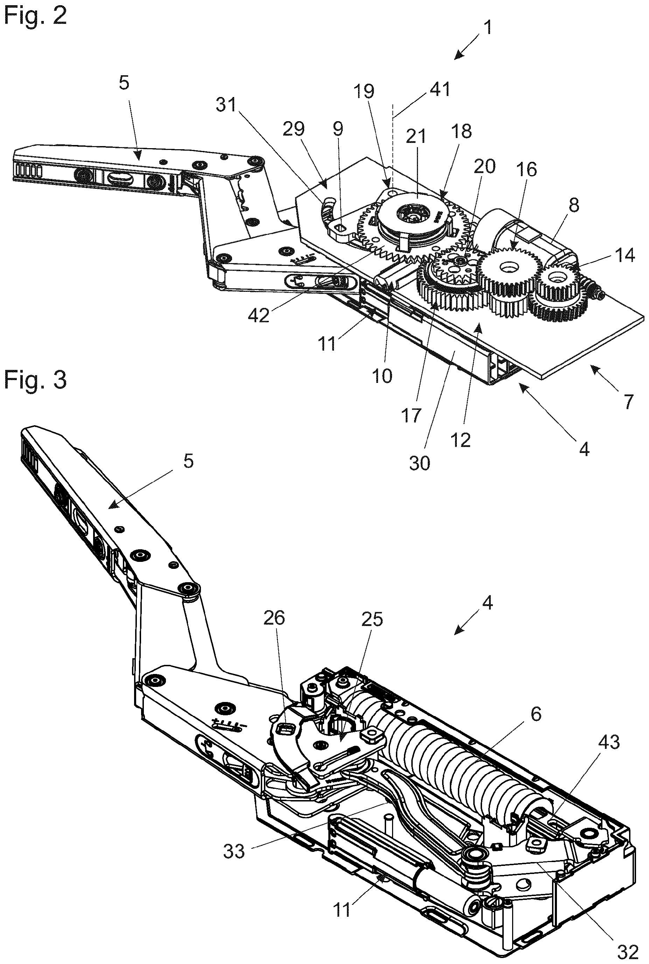

Figur 2 zeigt das Möbelantriebssystem 1 in einer Detaildarstellung, wobei die in den Figuren 1a und 1b zu sehende Abdeckung 40 weggelassen wurde. Das Möbelantriebssystem 1 umfasst einerseits eine mechanische Stelleinheit 4 und eine elektrische Antriebseinheit 7, welche als eine von der mechanischen Stelleinheit 4 gesondert ausgebildete Baueinheit ausgeführt ist.

Die elektrische Antriebseinheit 7 umfasst einen Elektromotor 8 zur elektromotorischen Unterstützung der Bewegung des bewegbaren Möbelteils 3, welches, wie in der Figur 1a zu sehen ist, mit dem Stellarm 5 befestigt werden kann. Weiterhin umfasst die elektrische Antriebseinheit 7 einen vom Elektromotor 8 antreibbaren Mitnehmer 9 zur Übertragung eines Drehmoments des Elektromotors 8 auf die mechanische Stelleinheit 4 bzw. auf den Stellarm 5 und ein gegebenenfalls damit verbundenes Möbelteil 3.

Die mechanische Stelleinheit 4 und die elektrische Antriebseinheit 7 sind lösbar miteinander verbindbar. Dadurch kann die elektrische Antriebseinheit 7 in einfacher Weise mit der mechanischen Stelleinheit 4 verbunden oder von ihr getrennt werden.

Die Komponenten der elektrischen Antriebseinheit 7 können wie dargestellt auf einer Montageplatte 29 angeordnet sein. Die Montageplatte 29 liegt an der mechanischen Stelleinheit 4 zumindest bereichsweise an. Sie trennt in dem dargestellten Ausführungsbeispiel die mechanische Stelleinheit 4 von der Baueinheit der elektrischen Antriebseinheit 7.

Anstelle einer Montageplatte 29 kann zum Beispiel auch ein Gehäuse zum Einsatz kommen, welches die Baueinheit der elektrischen Antriebseinheit 7 im Wesentlichen umschließt.

Zwischen dem Elektromotor 8 und dem Mitnehmer 9 ist ein Getriebe 12 vorgesehen, welches ein Drehmoment des Elektromotors 8 in eine Schwenkbewegung des Mitnehmer 9 um eine Drehachse 41 umwandelt. Das Getriebe 12 umfasst mehrere, konkret fünf, Getriebestufen 14, 16, 17, 18 und 19. Die Getriebestufen stehen jeweils zueinander über Verzahnungen in Eingriff. Weiterhin umfasst das Getriebe 12 eine Freilaufkupplung 20, welche in die Getriebestufe 17 integriert ist, sowie eine Überlastkupplung 21, welche in die Getriebestufe 18 integriert ist.

Der Mitnehmer 9 ist im dargestellten Ausführungsbeispiel als Zapfen ausgebildet, welcher in einer Führungskontur 31, welche in der Montageplatte 29 ausgebildet, begrenzt verschiebbar gelagert ist. Der Mitnehmer 9 überragt die Montageplatte 29 auf der Seite, welche der Seite, auf welcher der Elektromotor 8 angeordnet ist, gegenüber liegt.

Die Figur 3 zeigt Einzelheiten der mechanischen Stelleinheit 4, wobei Gehäuseabschnitte der mechanischen Stelleinheit 4 in der Darstellung weggelassen wurden. Das betrifft beispielsweise das Gehäuse 30 der in der mechanischen Stelleinheit 4 vorgesehenen Dämpfungsvorrichtung 11.

Die mechanische Stelleinheit 4 umfasst einen schwenkbar gelagerten Stellarm 5 zum Bewegen des bewegbaren Möbelteils 3 und einen Kraftspeicher 6 zur Kraftbeaufschlagung des wenigstens einen Stellarms 5.

Der Stellarm 5 ist in Form eines Gelenkhebels ausgebildet, welcher mehrere Drehpunkte umfasst.

Der Kraftspeicher 6 ist als Federvorrichtung ausgebildet. Konkret kann sich um eine Druckfeder handeln, welche auf einer Federführung 43 angeordnet ist. Der Kraftspeicher 6 dient im dargestellten Ausführungsbeispiel im Wesentlichen dazu, das Gewicht des Möbelteils 3 zu kompensieren.

Die im Kraftspeicher 6 speicherbare Kraft wird über Umlenkhebel 32 und 33 auf den Stellarm 5 übertragen.

Weiterhin umfasst die mechanische Stelleinheit 4 ein bewegbar gelagertes Stellteil 25 zur Übertragung einer Kraft von dem Kraftspeicher 6 auf den Stellarm 5, wobei das Stellteil 25 eine Übertragungsöffnung 26 aufweist, in welche der von dem Elektromotor 8 antreibbare Mitnehmer 9 eingreift oder eingreifen kann. Ein Drehmoment des Elektromotors 8 wird somit über den Mitnehmer 9 auf die mechanische Stelleinheit 4 bzw. den Stellarm 5 der mechanischen Stelleinheit 4 übertragen.

Obgleich dies in dem dargestellten Ausführungsbeispiel nicht realisiert ist, kann es auch vorgesehen sein, dass an der mechanischen Stelleinheit 4 ein hervorstehender Mitnehmer ausgebildet ist, welcher in eine Öffnung im Getriebe der elektrischen Antriebseinheit 7 eingreift.

Die mechanische Stelleinheit 4 umfasst eine Dämpfungsvorrichtung 11 zur Dämpfung der Bewegung des bewegbaren Möbelteils 3. Die Dämpfungsvorrichtung 11 ist als Lineardämpfer ausgebildet und fungiert als Schließdämpfer. Das bedeutet, dass die Dämpfungsvorrichtung 11 zumindest in einem Teilbereich zwischen einer Stellung des schwenkbar gelagerten Stellarms 5, welcher einer Schließstellung des bewegbaren Möbelteils 3 entspricht, und einer Stellung des schwenkbar gelagerten Stellarms 5, welcher einer der Schließstellung vorgelagerten Teilöffnungsstellung des bewegbaren Möbelteils 3 entspricht, beaufschlagbar ist. Die Dämpfungsvorrichtung 11 ermöglicht also ein sanftes Schließen des bewegbaren Möbelteils 3. Alternativ oder ergänzend zum Lineardämpfer kann auch ein Rotationsdämpfer eingesetzt werden.

Erfindungsgemäß weist das Möbelantriebssystem 1 eine Dämpfungsvorrichtung 10 zur Dämpfung der Bewegung des bewegbaren Möbelteils 3 auf, wobei diese Dämpfungsvorrichtung 10 in der Baueinheit der elektrischen Antriebseinheit 7 angeordnet ist.

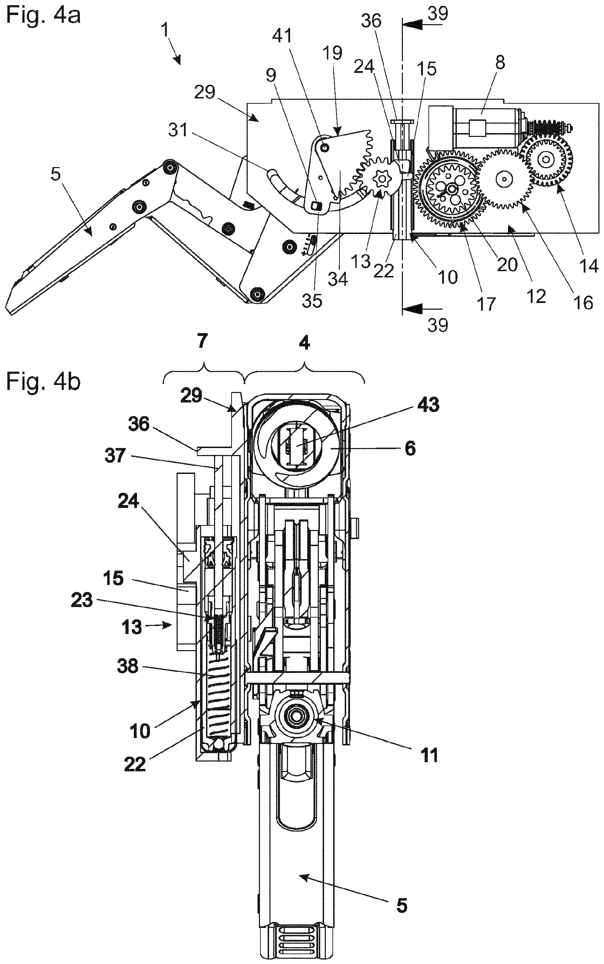

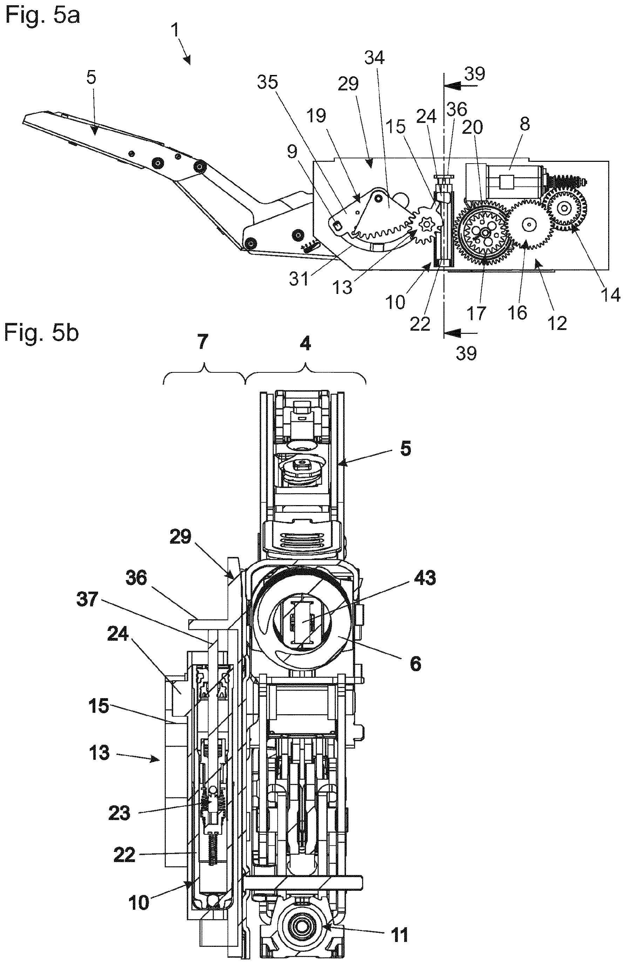

Ein bevorzugtes Ausführungsbeispiel ist insbesondere in den Figuren 4a, 4b, 5a und 5b dargestellt, wobei zum besseren Verständnis gegenüber der Figur 2 ein Teil der Getriebestufe 18 weggelassen wurde. Die Dämpfungsvorrichtung 10 ist von einem Teil 13 des Getriebes 12 beaufschlagbar, wobei dieses Teil 13 einen schwenkbar gelagerten Hebel 15, welcher in Kontakt mit der Dämpfungsvorrichtung 10 bringbar ist, aufweist. Der Teil 13 ist Bestandteil der Getriebestufe 18, welche einerseits mit der Getriebestufe 17 und andererseits mit der Getriebestufen 19 zusammenwirkt. Weitere Bestandteile der Getriebestufe 18 sind ein drehfest mit dem Teil 13 verbundenes Zahnrad 42 und eine Überlastkupplung 21 (vergleiche Figur 2).

Die Dämpfungsvorrichtung 10 kann aber auch von einem anderen Teil des Getriebes 12 beaufschlagt werden. Alternativ oder ergänzend dazu kann es aber auch vorgesehen sein, dass die mechanische Stelleinheit 4 wenigstens einen Aktuator umfasst und die in der Baueinheit der elektrischen Antriebseinheit 7 angeordnete Dämpfungsvorrichtung 10 von dem wenigstens einen Aktuator der mechanischen Stelleinheit 4 beaufschlagbar ist. In diesem Fall kann die Dämpfungsvorrichtung 10 zwar in der Baueinheit der elektrischen Antriebseinheit 7 angeordnet sein, muss aber nicht von einem Teil des Antriebsstrangs der elektrischen Antriebseinheit 7 beaufschlagt werden.

Die Dämpfungsvorrichtung 10 ist als Lineardämpfer mit einem Zylinder 22 und einem relativ dazu bewegbaren Kolben 23 ausgebildet, wobei am Zylinder 22 ein Anschlag 24 zur Beaufschlagung des Lineardämpfers angeordnet ist. Alternativ oder ergänzend zum Lineardämpfer kann auch ein Rotationsdämpfer eingesetzt werden.

Die Figuren 4a und 4b zeigen eine Stellung des Stellarms 5, in welcher der Hebel 15 am Getriebeteil 13 bei einer Bewegung ausgehend von der Schließstellung auf den Anschlag 24 am Zylinder 22 betrifft. Bis zu dieser Stellung stehen der Hebel 15 und der Anschlag 24 bzw. allgemein ausgedrückt das Getriebe 12 und die Dämpfungsvorrichtung 10 nicht in Kontakt. Ausgehend von der in den Figuren 4a und 4b gezeigten Stellung in Richtung der vollständigen Öffnungsstellung, welche in den Figuren 5a und 5b gezeigt ist, liegt der Hebel 15 immer am Anschlag 24 an. Das bedeutet, dass die in der Baueinheit der elektrischen Antriebseinheit 7 angeordnete Dämpfungsvorrichtung 10 nur über einen Teilbereich der Bewegung des schwenkbar gelagerten Stellarms 5 beaufschlagbar ist, wobei der Teilbereich zwischen einer Stellung des schwenkbar gelagerten Stellarms 5, welcher einer Teilöffnungsstellung des bewegbaren Möbelteils 3 entspricht, und einer Stellung des schwenkbar gelagerten Stellarms 5, welcher einer vollständigen Öffnungsstellung des bewegbaren Möbelteils 3 entspricht, angeordnet ist.

Die bei dem bevorzugten Ausführungsbeispiel in der Baueinheit der elektrischen Antriebseinheit 7 angeordnete Dämpfungsvorrichtung 10 fungiert also als Öffnungsdämpfer, der dafür sorgt, dass das bewegbare Möbelteil 3 sanft in die vollständigen Öffnungsstellung bewegt wird. Allerdings findet diese Öffnungsdämpfung nur dann statt, wenn die mechanische Stelleinheit 4 zusammen mit der elektrischen Antriebseinheit 7 betrieben wird, da die Dämpfungsvorrichtung 10 integraler Bestandteil der elektrischen Antriebseinheit 7 ist und somit zusammen mit ihr der mechanischen Stelleinheit 4 hinzugefügt wird. Entfernt man die elektrische Antriebseinheit 7, so wird gleichzeitig auch die Dämpfungsvorrichtung 10 entfernt und die mechanische Stelleinheit 4 umfasst nur noch die in der mechanischen Stelleinheit gegebenenfalls vorgesehenen weiteren Dämpfungsvorrichtungen. Auf diese Weise ist es möglich, Änderungen bei den Erfordernissen an die Dämpfungswirkung, welche sich durch die Hinzufügung der elektrischen Antriebseinheit ergeben, gezielt Rechnung zu tragen.

Aus der Querschnittsdarstellung gemäß der Figur 4b geht hervor, dass die Dämpfungsvorrichtung 10 eine Rückstellfeder 38 umfasst, welche die Dämpfungsvorrichtung 10 nach erfolgtem Dämpfungshub wieder in die Ausgangsstellung überführt, sodass die Dämpfungsvorrichtung 10 wieder für einen weiteren Dämpfungshub bereit ist.

Weiterhin geht aus den Querschnittsdarstellungen gemäß den Figuren 4b und 5b hervor, dass der Kolben 23 mit einer Kolbenstange 37 verbunden ist, welche sich an einem Anschlag 36, welcher an der Montageplatte 29 ausgebildet ist, abstützt. Beim Dämpfungshub bewegt sich also der Zylinder 22 relativ zum feststehenden Kolben 23. Es ist aber auch die kinematische Umkehrlösung möglich, nämlich dass der Zylinder beim Dämpfungshub in Ruhe verbleibt und sich der Kolben relativ dazu bewegt. Hierzu könnte beispielsweise das Ende der Kolbenstange von einem Teil des Getriebes 12 beaufschlagt werden.

Die Figuren 5a und 5b zeigen das Möbelantriebssystem 1 in der vollständigen Öffnungsstellung. Ein Vergleich mit den Figuren 4a und 4b zeigt, dass sich der Zylinder 22 der Dämpfungsvorrichtung 10 relativ zum Kolben 23 bewegt hat. Diese Bewegung wurde durch eine Drehbewegung des Teils 13 des Getriebes 12 bzw. des damit verbundenen Hebels 15, welcher in Kontakt mit den Anschlag 24 am Zylinder 22 steht, bewirkt. Das bedeutet, dass die Bewegung des Stellarms 5 bzw. eines damit verbundenen Möbelteils 3 in die vollständigen Öffnungsstellung durch die Dämpfungsvorrichtung 10 gedämpft wurde.

Alternativ oder ergänzend zum Öffnungsdämpfer kann die elektrische Antriebseinheit auch noch ein oder mehrere Dämpfungsvorrichtungen umfassen, welche andere Teilbewegungen des Stellarms 5 bzw. eines damit verbundenen Möbelteils 3 dämpft.

### Bezugszeichenliste:

- 1: Möbelantriebssystem
- 2: Möbelkorpus
- 3: Möbelteil
- 4: mechanische Stelleinheit
- 5: Stellarm
- 6: Kraftspeicher
- 7: elektrische Antriebseinheit
- 8: Elektromotor
- 9: Mitnehmer
- 10: Dämpfungsvorrichtung
- 11: Dämpfungsvorrichtung
- 12: Getriebe
- 13: Teil des Getriebes
- 14: Getriebestufe
- 15: Hebel
- 16: Getriebestufe
- 17: Getriebestufe
- 18: Getriebestufe
- 19: Getriebestufe
- 20: Freilaufkupplung
- 21: Überlastkupplung
- 22: Zylinder
- 23: Kolben
- 24: Anschlag
- 25: Stellteil
- 26: Übertragungsöffnung
- 27: Möbel
- 28: horizontale Achse
- 29: Montageplatte

## Patentansprüche

1. Möbelantriebssystem (1) für ein an einem Möbelkorpus (2) bewegbar gelagertes Möbelteil (3), mit
- einer mechanischen Stelleinheit (4), welche wenigstens einen schwenkbar gelagerten Stellarm (5) zum Bewegen des bewegbaren Möbelteils (3) und wenigstens einen Kraftspeicher (6) zur Kraftbeaufschlagung des wenigstens einen Stellarms (5) aufweist,
- einer elektrischen Antriebseinheit (7), welche als eine von der mechanischen Stelleinheit (4) gesondert ausgebildete Baueinheit ausgeführt ist und welche wenigstens einen Elektromotor (8) zur elektromotorischen Unterstützung der Bewegung des bewegbaren Möbelteils (3) und wenigstens einen von dem wenigstens einen Elektromotor (8) antreibbaren Mitnehmer (9) zur Übertragung eines Drehmoments des Elektromotors (8) auf die mechanische Stelleinheit (4) aufweist,
- wenigstens einer Dämpfungsvorrichtung (10, 11) zur Dämpfung der Bewegung des bewegbaren Möbelteils (3), wobei die wenigstens eine Dämpfungsvorrichtung (10) zur Dämpfung der Bewegung des bewegbaren Möbelteils (3) in der Baueinheit der elektrischen Antriebseinheit (7) angeordnet ist,
- wobei zwischen dem wenigstens einen Elektromotor (8) und dem wenigstens einen Mitnehmer (9) ein Getriebe (12) vorgesehen ist, und die wenigstens eine in der Baueinheit der elektrischen Antriebseinheit (7) angeordnete Dämpfungsvorrichtung (10) von einem Teil (13) des Getriebes (12) beaufschlagbar ist,
**dadurch gekennzeichnet, dass** das Getriebe (12) wenigstens zwei Getriebestufen (14, 16, 17, 18, 19) aufweist, wobei zumindest die wenigstens eine in der Baueinheit der elektrischen Antriebseinheit (7) angeordnete Dämpfungsvorrichtung (10) als Lineardämpfer mit einem Zylinder (22) und einem relativ dazu bewegbaren Kolben (23) ausgebildet ist, vorzugsweise wobei am Zylinder (22) ein Anschlag (24) zur Beaufschlagung des Lineardämpfers angeordnet ist, wobei alternativ oder ergänzend zum Lineardämpfer ein Rotationsdämpfer vorgesehen ist.

2. Möbelantriebssystem (1) nach Anspruch 1, wobei das Getriebe (12) einen schwenkbar gelagerten Hebel (15), welcher in Kontakt mit der Dämpfungsvorrichtung (10) steht oder in Kontakt mit der Dämpfungsvorrichtung (10) bringbar ist, aufweist.

3. Möbelantriebssystem (1) nach Anspruch 1 oder 2, wobei das wenigstens eine Getriebe (12) eine Freilaufkupplung (20) und/oder eine Überlastkupplung (21) umfasst.

4. Möbelantriebssystem (1) nach einem der Ansprüche 1 bis 3, wobei die mechanische Stelleinheit (4) wenigstens einen Aktuator umfasst und die wenigstens eine in der Baueinheit der elektrischen Antriebseinheit (7) angeordnete Dämpfungsvorrichtung (10) von dem Aktuator der mechanischen Stelleinheit (4) beaufschlagbar ist.

5. Möbelantriebssystem (1) nach einem der Ansprüche 1 bis 4, wobei die wenigstens eine in der Baueinheit der elektrischen Antriebseinheit (7) angeordnete Dämpfungsvorrichtung (10) nur über einen Teilbereich der Bewegung des schwenkbar gelagerten Stellarms (5) beaufschlagbar ist, vorzugsweise wobei der Teilbereich zwischen einer Stellung des schwenkbar gelagerten Stellarms (5), welcher einer Teilöffnungsstellung des bewegbaren Möbelteils (3) entspricht, und einer Stellung des schwenkbar gelagerten Stellarms (5), welcher einer vollständigen Öffnungsstellung des bewegbaren Möbelteils (3) entspricht, angeordnet ist.

6. Möbelantriebssystem (1) nach einem der Ansprüche 1 bis 5, wobei auch die mechanische Stelleinheit (4) wenigstens eine Dämpfungsvorrichtung (11) zur Dämpfung der Bewegung des bewegbaren Möbelteils (3) umfasst, vorzugsweise welche zumindest in einem Teilbereich zwischen einer Stellung des schwenkbar gelagerten Stellarms (5), welcher einer Schließstellung des bewegbaren Möbelteils (3) entspricht, und einer Stellung des schwenkbar gelagerten Stellarms (5), welcher einer der Schließstellung vorgelagerten Teilöffnungsstellung des bewegbaren Möbelteils (3) entspricht, beaufschlagbar ist.

7. Möbelantriebssystem (1) nach einem der Ansprüche 1 bis 6, wobei die wenigstens eine in der Baueinheit der elektrischen Antriebseinheit (7) angeordnete Dämpfungsvorrichtung (10) als mechanische Dämpfungsvorrichtung ausgebildet ist.

8. Möbelantriebssystem (1) nach einem der Ansprüche 1 bis 7, wobei die mechanische Stelleinheit (4) und die elektrische Antriebseinheit (7) lösbar miteinander verbindbar sind.

9. Möbelantriebssystem (1) nach einem der Ansprüche 1 bis 8, wobei die mechanische Stelleinheit (4) wenigstens ein bewegbar gelagertes Stellteil (25) zur Übertragung einer Kraft von dem wenigstens einen Kraftspeicher (6) auf den wenigstens einen Stellarm (5) aufweist, wobei das wenigstens eine Stellteil (25) wenigstens eine Übertragungsöffnung (26) aufweist, in welche der wenigstens eine von dem wenigstens einen Elektromotor (8) antreibbare Mitnehmer (9) eingreift oder eingreifen kann.

10. Möbelantriebssystem (1) nach einem der Ansprüche 1 bis 9, wobei die elektrische Antriebseinheit (7) wenigstens eine Montageplatte (29) aufweist, auf welcher zumindest der wenigstens eine Elektromotor (8) angeordnet ist, und welche an der mechanischen Stelleinheit (4) zumindest bereichsweise anliegt.

11. Möbelantriebssystem (1) nach einem der Ansprüche 1 bis 10, wobei der wenigstens eine Kraftspeicher (6) der mechanischen Stelleinheit (4) als Federvorrichtung ausgebildet ist.

12. Möbel (27) mit einem Möbelkorpus (2), wenigstens einem am Möbelkorpus (2) bewegbar gelagerten Möbelteil (3) und wenigstens einem Möbelantriebssystem (1) nach einem der vorhergehenden Ansprüche für das wenigstens eine Möbelteil (3), vorzugsweise wobei das wenigstens eine bewegbare Möbelteil (3) um eine horizontale Achse (28) verschwenkbar ist.

## Claims

1. A furniture drive system (1) for a furniture part (3) that is movably mounted on a furniture carcass (2), with
- a mechanical actuating unit (4), which has at least one pivotably mounted actuating arm (5) for moving the movable furniture part (3) and at least one energy storage mechanism (6) for applying force to the at least one actuating arm (5),
- an electric drive unit (7), which is designed as an assembly formed separate from the mechanical actuating unit (4) and which has at least one electric motor (8) for the electromotive support of the movement of the movable furniture part (3) and at least one driver (9), that can be driven by the at least one electric motor (8), for transmitting a torque of the electric motor (8) to the mechanical actuating unit (4),
- at least one damping device (10, 11) for damping the movement of the movable furniture part (3), wherein the at least one damping device (10) for damping the movement of the movable furniture part (3) is arranged in the assembly of the electric drive unit (7),
- wherein a gear mechanism (12) is provided between the at least one electric motor (8) and the at least one driver (9), and the at least one damping device (10) arranged in the assembly of the electric drive unit (7) can be acted upon by a part (13) of the gear mechanism (12),
**characterized in that** the gear mechanism (12) comprises at least two gear stages (14, 16, 17, 18, 19), wherein the at least one damping device (10) arranged in the assembly of the electric drive unit (7) is formed as a linear dashpot with a cylinder (22) and a piston (23) movable relative thereto, preferably wherein a stop (24) for acting on the linear dashpot is arranged on the cylinder (22), wherein, alternatively or in addition to the linear dashpot, a rotary dashpot is provided.

2. The furniture drive system (1) according to claim 1, wherein the gear mechanism (12) has a pivotably mounted lever (15), which is in contact with the damping device (10) or can be brought into contact with the damping device (10).

3. The furniture drive system (1) according to claim 1 or 2, wherein the at least one gear mechanism (12) comprises a free-wheel clutch (20) and/or an overload clutch (21).

4. The furniture drive system (1) according to one of the claims 1 to 3, wherein the mechanical actuating unit (4) comprises at least one actuator, and the at least one damping device (10) arranged in the assembly of the electric drive unit (7) can be acted upon by the actuator of the mechanical actuating unit (4).

5. The furniture drive system (1) according to one of the claims 1 to 4, wherein the at least one damping device (10) arranged in the assembly of the electric drive unit (7) can be acted upon only over a partial range of the movement of the pivotably mounted actuating arm (5), preferably wherein the partial range is arranged between a position of the pivotably mounted actuating arm (5) which corresponds to a partially open position of the movable furniture part (3) and a position of the pivotably mounted actuating arm (5) which corresponds to a completely open position of the movable furniture part (3) .

6. The furniture drive system (1) according to one of the claims 1 to 5, wherein also the mechanical actuating unit (4) comprises at least one damping device (11) for damping the movement of the movable furniture part (3), preferably which can be can be acted upon at least in a partial range between a position of the pivotably mounted actuating arm (5) which corresponds to a closed position of the movable furniture part (3) and a position of the pivotably mounted actuating arm (5) which corresponds to a partially open position of the movable furniture part (3) before the closed position.

7. The furniture drive system (1) according to one of the claims 1 to 6, wherein the at least one damping device (10) arranged in the assembly of the electric drive unit (7) is in the form of a mechanical damping device.

8. The furniture drive system (1) according to one of the claims 1 to 7, wherein the mechanical actuating unit (4) and the electric drive unit (7) can be detachably connected to each other.

9. The furniture drive system (1) according to one of the claims 1 to 8, wherein the mechanical actuating unit (4) has at least one movably mounted actuating part (25) for transmitting a force from the at least one energy storage mechanism (6) to the at least one actuating arm (5), wherein the at least one actuating part (25) has at least one transmission opening (26), in which the at least one driver (9) that can be driven by the at least one electric motor (8) engages or can engage.

10. The furniture drive system (1) according to one of the claims 1 to 9, wherein the electric drive unit (7) has at least one mounting plate (29), on which at least the at least one electric motor (8) is arranged, and which rests against the mechanical actuating unit (4) at least in some areas.

11. The furniture drive system (1) according to one of the claims 1 to 10, wherein the at least one energy storage mechanism (6) of the mechanical actuating unit (4) is formed as a spring device.

12. A piece of furniture (27) with a furniture carcass (2), at least one furniture part (3) that is movably mounted on the furniture carcass (2) and at least one furniture drive system (1) according to one of the preceding claims for the at least one furniture part (3), preferably wherein the at least one movable furniture part (3) is pivotable about a horizontal axis (28).

## Revendications

1. Système d'entraînement pour meubles (1) pour une partie de meuble (3) logée de manière mobile au niveau d'un corps de meuble (2), avec
- une unité de réglage (4) mécanique qui présente au moins un bras de réglage (5) logé de manière pivotante pour le déplacement de la partie de meuble (3) mobile et au moins un accumulateur de force (6) pour la sollicitation de force d'au moins un bras de réglage (5),
- une unité d'entraînement (7) électrique qui est réalisée comme une unité de construction réalisée séparément de l'unité de réglage (4) mécanique et qui présente au moins un moteur électrique (8) pour l'appui électromotorisé du déplacement de la partie de meuble (3) mobile et au moins un élément d'entraînement (9) entraînable par l'au moins un moteur électrique (8) pour la transmission d'un couple du moteur électrique (8) à l'unité de réglage (4) mécanique,
- au moins un dispositif d'amortissement (10, 11) pour l'amortissement du déplacement de la partie de meuble (3) mobile, dans lequel l'au moins un dispositif d'amortissement (10) est agencé pour l'amortissement du déplacement de la partie de meuble (3) mobile dans l'unité de construction de l'unité d'entraînement (7) électrique,
- dans lequel un engrenage (12) est prévu entre l'au moins un moteur électrique (8) et l'au moins un élément d'entraînement (9), et l'au moins un dispositif d'amortissement (10) agencé dans l'unité de construction de l'unité d'entraînement (7) électrique peut être sollicité par une partie (13) de l'engrenage (12),
**caractérisé en ce que** l'engrenage (12) présente au moins deux étages d'engrenage (14, 16, 17, 18, 19), dans lequel au moins l'au moins un dispositif d'amortissement (10) agencé dans l'unité de construction de l'unité d'entraînement (7) électrique est réalisé comme amortisseur linéaire avec un cylindre (22) et un piston (23) mobile par rapport à celui-ci, de préférence dans lequel au niveau du cylindre (22), une butée (24) est agencée pour la sollicitation de l'amortisseur linéaire, dans lequel en variante ou en complément à l'amortisseur linéaire, un amortisseur de rotation est prévu.

2. Système d'entraînement pour meubles (1) selon la revendication 1, dans lequel l'engrenage (12) présente un levier (15) logé de manière pivotante qui est en contact avec le dispositif d'amortissement (10) ou peut être amené en contact avec le dispositif d'amortissement (10).

3. Système d'entraînement pour meubles (1) selon la revendication 1 ou 2, dans lequel l'au moins un engrenage (12) comporte un couplage à roue libre (20) et/ou un couplage de surcharge (21).

4. Système d'entraînement pour meubles (1) selon l'une quelconque des revendications 1 à 3, dans lequel l'unité de réglage (4) mécanique comporte au moins un actionneur et l'au moins un dispositif d'amortissement (10) agencé dans l'unité de construction de l'unité d'entraînement (7) électrique peut être sollicité par l'actionneur de l'unité de réglage (4) mécanique.

5. Système d'entraînement pour meubles (1) selon l'une quelconque des revendications 1 à 4, dans lequel l'au moins un dispositif d'amortissement (10) agencé dans l'unité de construction de l'unité d'entraînement (7) électrique peut être sollicité seulement par le biais d'une zone partielle du déplacement du bras de réglage (5) logé de manière pivotante, de préférence dans lequel la zone partielle est agencée entre une position du bras de réglage (5) logé de manière pivotante qui correspond à une position d'ouverture partielle de la partie de meuble (3) mobile, et une position du bras de réglage (5) logé de manière pivotante qui correspond à une position d'ouverture complète de la partie de meuble (3) mobile.

6. Système d'entraînement pour meubles (1) selon l'une quelconque des revendications 1 à 5, dans lequel l'unité de réglage (4) mécanique comporte aussi au moins un dispositif d'amortissement (11) pour l'amortissement du déplacement de la partie de meuble (3) mobile, de préférence qui peut être sollicité au moins dans une zone partielle entre une position du bras de réglage (5) logé de manière pivotante qui correspond à une position de fermeture de la partie de meuble (3) mobile, et une position du bras de réglage (5) logé de manière pivotante qui correspond à une position d'ouverture partielle logée en amont de la position de fermeture de la partie de meuble (3) mobile.

7. Système d'entraînement pour meubles (1) selon l'une quelconque des revendications 1 à 6, dans lequel l'au moins un dispositif d'amortissement (10) agencé dans l'unité de construction de l'unité d'entraînement (7) électrique est réalisé comme dispositif d'amortissement mécanique.

8. Système d'entraînement de meuble (1) selon l'une quelconque des revendications 1 à 7, dans lequel l'unité de réglage (4) mécanique et l'unité d'entraînement (7) électrique peuvent être reliées entre elles de manière amovible.

9. Système d'entraînement pour meubles (1) selon l'une quelconque des revendications 1 à 8, dans lequel l'unité de réglage (4) mécanique présente au moins une partie de réglage (25) logée de manière mobile pour la transmission d'une force de l'au moins un accumulateur de force (6) à l'au moins un bras de réglage (5), dans lequel l'au moins une partie de réglage (25) présente au moins une ouverture de transmission (26), dans laquelle l'au moins un élément d'entraînement (9) entraînable par l'au moins un moteur électrique (8) s'engage ou peut s'engager.

10. Système d'entraînement pour meubles (1) selon l'une quelconque des revendications 1 à 9, dans lequel l'unité d'entraînement (7) électrique présente au moins une plaque de montage (29), sur laquelle au moins l'au moins un moteur électrique (8) est agencé, et qui repose au moins par endroits contre l'unité de réglage (4) mécanique.

11. Système d'entraînement pour meubles (1) selon l'une quelconque des revendications 1 à 10, dans lequel l'au moins un accumulateur de force (6) de l'unité de réglage (4) mécanique est réalisé comme dispositif de ressort.

12. Meuble (27) avec un corps de meuble (2), au moins une partie de meuble (3) logée de manière mobile au niveau du corps de meuble (2) et au moins un système d'entraînement de meuble (1) selon l'une quelconque des revendications précédentes pour l'au moins une partie de meuble (3), de préférence dans lequel l'au moins une partie de meuble (3) mobile est pivotante autour d'un axe horizontal (28).
